# EUROPÄISCHE PATENTSCHRIFT

(11) **EP 2 378 019 B1**
(45) Veröffentlichungstag und Bekanntmachung des Hinweises auf die Patenterteilung: **14.10.2015**
(21) Anmeldenummer: 11003007.9
(22) Anmeldetag: 11.04.2011
(51) Int. Cl.: E04B 1/76, F16B 13/12, B25B 21/00, B25B 23/00

(54) **Verfahren sowie Werkzeug zur Montage einer Dämmstoffplatte an einer Unterkonstruktion**
Method and tool for fitting an insulating board to a substructure
Procédé, ainsi qu'outil pour le montage d'une plaque isolante sur une sous-construction

(30) Priorität: 15.04.2010 DE 102010015255; 07.04.2011 DE 102011016383
(43) Veröffentlichungstag der Anmeldung: 19.10.2011
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A1- 0 535 547
- EP-A2- 1 318 250
- EP-A2- 1 505 218
- EP-A2- 1 650 368
- EP-A2- 2 042 666
- JP-A- 2007 283 464

## Beschreibung

Die Erfindung betrifft ein Verfahren zur Montage einer Dämmstoffplatte an einer Unterkonstruktion, bei dem ein aus einem Halteteller und sich daran anschließend einer in eine Spreizzone übergehenden Dübelhülse bestehender, ein stiftartiges Spreizelement aufnehmender, in ein in der Dämmstoffplatte und der Unterkonstruktion zuvor gebohrtes Loch eingesetzter Tellerdübel als Befestigungselement mit einem Einschraubmittel rotierend in das Isoliermaterial der Dämmstoffplatte eingetrieben wird, wobei in Eintriebrichtung vor dem Halteteller ein Senkloch entsteht, das nach außen abgedichtet wird und dessen aus der Dämmstoffplatte verdrängtes Isoliermaterial in der Dämmstoffplatte verbleibt. Weiterhin betrifft die Erfindung ein Werkzeug zum Durchführen des Verfahrens.

Ein solches Montageverfahren ist durch die EP 2 042 666 A2 bekannt geworden. Der als Befestigungselement in das Bohrloch der Dämmstoffplatte und der Unterkonstruktion gesteckte Tellerdübel besitzt einen Halte- bzw. Druckteller, der mit Durchgangsöffnungen bzw. Ausnehmungen versehen ist und an der in Einführrichtung unteren bzw. vorderen Seite Fräsvorrichtungen zum Ausfräsen der Dämmstoffplatte aufweist. Wenn die Eintreibvorrichtung, z.B. ein Schraubendreher, Akkuschrauber, Bohrer oder dergleichen Einschraubmittel, die dort in eine unmittelbar in einem Kopf des stiftartigen Spreizelementes, insbesondere eine Schraube oder ein Nagel, vorgesehene Werkzeugaufnahme eingreift, in Betrieb gesetzt wird, wird die Drehbewegung des Einschraubmittels von dem Spreizelement über eine Formschlussverbindung mit der Dübelhülse auf den Halte- bzw. Druckteller übertragen. Dabei wird die Dämmstoffplatte durch die Fräsvorrichtungen eingefräst, wobei das ausgefräste Dämmstoffmaterial durch die Durchgangsöffnungen des Haltetellers hindurchtreten kann.

Damit das ausgefräste Dämmstoffmaterial gleichwohl nicht an die Umgebung gelangen kann, wird es in einer Auffangvorrichtung gesammelt, die als mit dem Halteteller verbindbare Kappe oder als Beutel oder nach oben hin geschlossener Tiefenanschlag der Eintreibvorrichtung ausgebildet sein kann. Die mit dem ausgefrästen Dämmstoffmaterial aufgefüllte Kappe kann als Abdeckscheibe in der Dämmstoffplatte verbleiben; ansonsten muß zur Isolierung gegen die Umwelt in das Senkloch eine Abdeckscheibe eingesetzt werden.

Zum Auffangen und Sammeln von Bohrspänen ist auch aus der JP 2007283464 A eine topfartige Auffangvorrichtung bekannt. Durch die EP 1 650 368 A2 ist ein zwei konzentrische Ringkammern aufweisender Verschlussdeckel bekannt geworden. Dieser wird als Untergrund für einen zu befestigenden Gegenstand über einen Abstandshalter und eine aushärtbare Verfüllmasse gestülpt.

Der Erfindung liegt die Aufgabe zugrunde, ein Montageverfahren der eingangs genannten Art zu schaffen, das in einfacherer und verbesserter, sicherer Weise eine zur Umwelt hin staubfreie Versenkung des Befestigungselementes ermöglicht, ohne dabei eine gesondert mit dem Halteteller zu verrastende oder gar mit diesem einstückig auszubildende Auffangvorrichtung, wie in Form einer Kappe oder eines Beutels, zu benötigen und insbesondere dabei gleichzeitig eine bessere Isolierung des Befestigungselementes bzw. dessen metallischen, stiftartigen Spreizelements gewährleistet. Weiterhin sollte ein dazu geeignetes Montagewerkzeug geschaffen werden.

Diese Aufgabe wird für ein Verfahren erfindungsgemäß dadurch gelöst, dass eine der Dämmstoffplatte zugewandte Abdeckscheibe beim Vortrieb des Tellerdübels in das Isoliermaterial zumindest bis zum Erreichen der der Dicke der Abdeckscheibe entsprechenden Eindringtiefe von einem Federelement beaufschlagt permanent auf Spannung zu dem Halteteller des Tellerdübels gehalten wird, wobei das entstehende Senkloch von der konzentrisch dazu an den äußeren Randbereich des Haltetellers angedrückten Abdeckscheibe voll umfänglich nach außen abgedichtet wird und wobei zwischen dem Halteteller und der nach dem Vortriebsende in dem Senkloch des Isoliermaterials verbleibenden, dieses flächenbündig abschließenden Abdeckscheibe ein isolierender Luftraum ausgebildet wird.

Der Erfindung liegt die Erkenntnis zugrunde, dass einerseits bei einer stetig aufgebrachten Andruckkraft keine sich unter der Einwirkung des Einschraubmittels möglicherweise sogar lösende Verklammerung bzw. -rastung einer Auffangvorrichtung mit dem Tellerdübel mehr erforderlich ist, sondern ein zur Isolierung des Befestigungsmittels ohnehin benötigtes Bauteil, nämlich die Abdeckscheibe bzw. Rondelle, mit noch weiter erhöhten Isoliereigenschaften verwendet werden kann, indem andererseits sogleich auch ein den Wärmedurchgangskoeffizient deutlich erhöhendes Luftpolster geschaffen wird. Es wird damit möglich, in einem Arbeitsgang einhergehend mit dem Einbringen des Tellerdübels diesen samt Halteteller staubfrei zu versenken und mit Ausbildung eines Luftraums gleichzeitig die Abdeckscheibe einzusetzen. Da das Isoliermaterial aus dem Senkloch zudem nicht ausgefräst, sondern beim Rotieren des Tellerdübels durch quasi einen Schmelzvorgang (Drehschmelzen) abgelöst bzw. verdrängt wird, kann ein Tellerdübel mit einem geschlossenen Halteteller zum Einsatz kommen. Das mit Verschmelzung verdrängte Isoliermaterial wird unter dem Halteteller eingeschlossen. Es braucht dann lediglich noch das Einschraubmittel bzw. -werkzeug aus den Tellerdübel und der Abdeckscheibe herausgezogen bzw. davon abgezogen zu werden, wobei die Abdeckscheibe das Senkloch bündig mit der Oberfläche der Dämmstoffplatte abschließend in der montierten Position mit Luftraum zum Halteteller verbleibt.

Nach einer sehr vorteilhaften ersten erfindungsgemäßen Variante wird der Luftraum durch eine in der der Dämmstoffplatte zugewandten Stirnseite der Abdeckscheibe ausgebildete Hohlkammer erzeugt.

Ein weiterer bevorzugter Vorschlag der Erfindung sieht vor, dass der Tellerdübel tiefer in das Isoliermaterial versenkt wird als die Abdeckscheibe und unterhalb der Abdeckscheibe bis zu dem Halteteller ein zu der Hohlkammer zusätzlicher Luftraum ausgebildet wird. Es lässt sich hierdurch der Wärmedurchgangskoeffizient an den Befestigungspunkten der Dämmstoffplatte zur Unterkonstruktion weiter verbessern. Der Tellerdübel kann durch einen entsprechend längeren Schraubbit tiefer in die Dämmstoffplatte versenkt werden. Das Senkloch kann gewünscht tiefer als die demgegenüber stets kleinere Dicke der Abdeckscheibe sein. Damit besteht sogar die Möglichkeit, die Isolierwirkung der Abdeckscheibe selbst zu erhöhen, die nämlich dicker, z. B. bis 20 mm oder bis 30 mm, sein kann als üblich mit einer Dicke bis etwa 10 mm.

Eine bevorzugte Ausführung der Erfindung sieht vor, dass bei der Montage unter Verwendung eines in seinem Halteteller mit Durchgangsöffnungen versehenen Tellerdübels in krümeliger oder körniger Form verdrängtes Isoliermaterial über die Durchgangsöffnungen entweichen kann und in der Hohlkammer und / oder dem zusätzlichen Luftraum unterhalb der Abdeckscheibe gesammelt wird.

Denn auch hierbei wird ein die Isolierung verbesserndes Luftpolster unverändert aufrecht erhalten. Wenn sich beim Drehschmelzen doch Körner oder Krümel ablösen, können diese über die Durchgangsöffnungen des Haltetellers entweichen und sich in der Hohlkammer und / oder dem zusätzlichen Luftraum, der zur Abdeckscheibe hin eine noch größere Luftschichtbildung ermöglicht, einlagern. Die Materialkörner bzw. -krümel führen dort unbeschadet von der Schmelzverfestigung zu wirksam isolierenden Lufteinschlüssen. Das bis in die Hohlkammer gelangende, warme Material bzw. Polystyrol kann sich umso besser mit der vorteilhaft aus dem gleichen Material wie die Dämmstoffplatte bestehenden Abdeckscheibe verfestigen.

Nach weiteren Vorschlägen der Erfindung wird die Abdeckscheibe von einem Federmittel beaufschlagt, vorzugsweise unter Zwischenschaltung einer Druckplatte, auf Spannung zum Halteteller gehalten. Die Druckplatte verteilt die Andrück- bzw. Vorspannkraft über eine große Fläche gleichmäßig auf die Abdeckscheibe. Dies auch noch über eine gewisse Zeit bzw. einen begrenzten Weg, wenn das Einschraubmittel bzw. -werkzeug nach der Montage entfernt bzw. aus dem Befestigungselement herausgezogen wird. Sollte es dabei zu einem Verkanten des Werkzeug-Schraubbits kommen, hält das federnde Druckstück gleichwohl die Abdeckscheibe eine gewisse, ausreichende Zeit lang nieder, so dass sie sich trotz eines möglichen Verkantens des Werkzeug-Schraubbits nicht mit aus dem Senkloch herausziehen lässt.

Die der Erfindung zugrundeliegende Aufgabe wird mit einem Werkzeug, das beim Einsatz einen von einem Einschraubmittel antreibbaren Schraubbit aufweist, mit den im Oberbegriff von Anspruch 8 angegebenen Merkmalen dadurch gelöst, dass in einer Gehäusekammer eines Werkzeuggehäuses mit begrenzt linearem Bewegungsspiel eine von einem Federmittel in Montagerichtung beaufschlagte Druckplatte angeordnet ist, wobei das Werkzeuggehäuse und die Druckplatte mit fluchtenden Durchgangsöffnungen für einen hindurchsteckbaren Schraubbit ausgebildet sind. Es liegt damit ein fest zusammengehaltenes Montagetool vor, so dass auf den Schraubbit vor der Druckplatte liegend lediglich noch die Abdeckscheibe aufgesetzt werden muss, um mit der Montage des Befestigungselementes zur staubfreien Versenkung des Tellerdübels mit gleichzeitigem Einbringen der Abdeckscheibe beginnen zu können.

Eine bevorzugte Ausführung der Erfindung sieht vor, dass der Gehäusekammer in Montagerichtung ein am Werkzeuggehäuse befestigter, die Druckplatte in der Gehäusekammer haltender Tiefenbegrenzungsanschlag vorgeschaltet ist, wobei die Druckplatte gestuft ausgebildet ist und sich mit einem gegenüber dem durch den Tiefenbegrenzungsanschlag hindurchgeführten Plattenkörper im Durchmesser größeren Plattenkragen auf den Tiefenbegrenzungsanschlag legt. Der Tiefenbegrenzungsanschlag erfüllt somit eine Doppelfunktion, indem er die flächenbündig mit der Oberfläche der Dämmstoffplatte verlaufende Einbringung der Abdeckscheibe gewährleistet und außerdem aber auch die von dem Federmittel, vorzugsweise eine Druckfeder, die sich an der Druckplatte und gegenüberliegend an der Endwand der Gehäusekammer abstützt, beaufschlagte Druckplatte unverlierbar im Gehäuse des Werkzeugs hält.

Eine, insbesondere bei einem Verfahren nach Anspruch 1 und mit einem Werkzeug nach Anspruch 8, zum Einsatz kommende Abdeckscheibe ist an einer Ringflächenseite mit einer Hohlkammer ausgebildet und weist zentrisch eine Schraubbit-Durchführungsöffnung auf. Beim Eintreiben eines einen Halteteller mit Durchgangsöffnungen aufweisenden Befestigungselementes in die Dämmstoffplatte kann sich das mit der Entstehung des Senkloches daraus gelöste Isoliermaterial (Krümel bzw. Körner) sogleich in der zum Verschließen des Senklochs ohnehin benötigten Abdeckscheibe ansammeln bzw. darin einlagern, ohne Möglichkeit zu haben, an die Umgebung bzw. in die Umwelt zu gelangen.

Die Abdeckscheibe ist, möglicherweise, konisch, sich von der hinteren Ringflächenseite bis hin zu der die Hohlkammer aufweisenden vorderen Ringflächenseite verjüngend ausgebildet, und zwar mit einem hinten gegenüber dem Senkloch größeren Durchmesser. Die somit im Senkloch erreichte Verklemmung trägt dazu bei, dass die Abdeckscheibe ihre Einbaulage in der Dämmstoffplatte einhält.

Weitere Merkmale und Einzelheiten der Erfindung ergeben sich aus den Ansprüchen und der nachfolgenden Beschreibung von in den Zeichnungen anhand eines Tellerdübels mit Durchgangsöffnungen seines Haltetellers und einer mit einer Hohlkammer ausgebildeten Abdeckscheibe schematisch dargestellten Ausführungsbeispielen der Erfindung. Es zeigen:
- Fig. 1a, b: als Befestigungselement einen Tellerdübel mit darin zum Aufweiten der Spreizzone angeordnetem, stiftartigem Spreizelement, in einem Teillängsschnitt (Fig. 1a) und in der Draufsicht (Fig. 1b) dargestellt;
- Fig. 2: eine Gesamtansicht eines Montagewerkzeugs;
- Fig. 3: das zur Montage einer Dämmstoffplätte an einer Unterkonstruktion vorbereitete Werkzeug nach Fig. 2 mit einem in Fig. 1 dargestellten Tellerdübel als Befestigungselement, in einem Längsschnitt dargestellt;
- Fig. 4: eine Darstellung wie in Fig. 3, demgegenüber die Endmontageposition zeigend;
- Fig. 5: als Einzelheit des Befestigungssystems eine Abdeckscheibe in einem Querschnitt (oben) und in der Draufsicht (unten); und
- Fig. 6: eine Draufsicht der Fig. 4 nach dem Abziehen bzw. Entfernen des Montagewerkzeugs, mit der in der Dämmstoffplatte verbleibenden, das Befestigungselement oberflächenbündig einschließenden, versenkten Abdeckscheibe der Fig. 5.

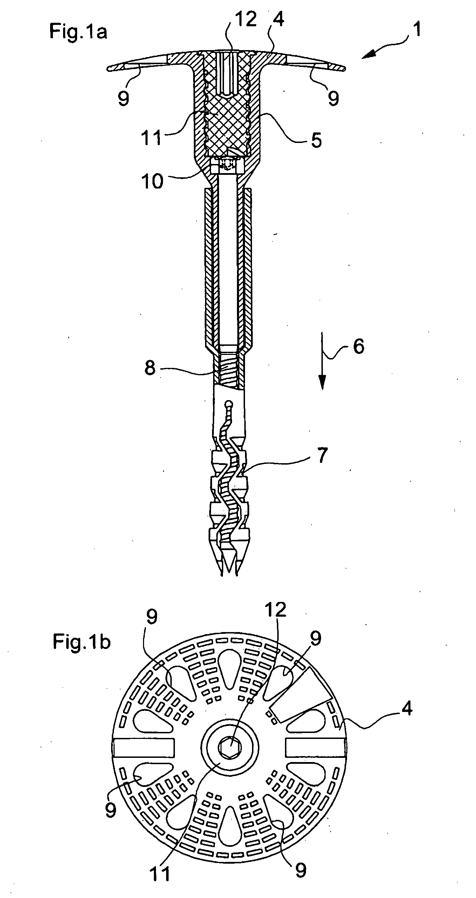

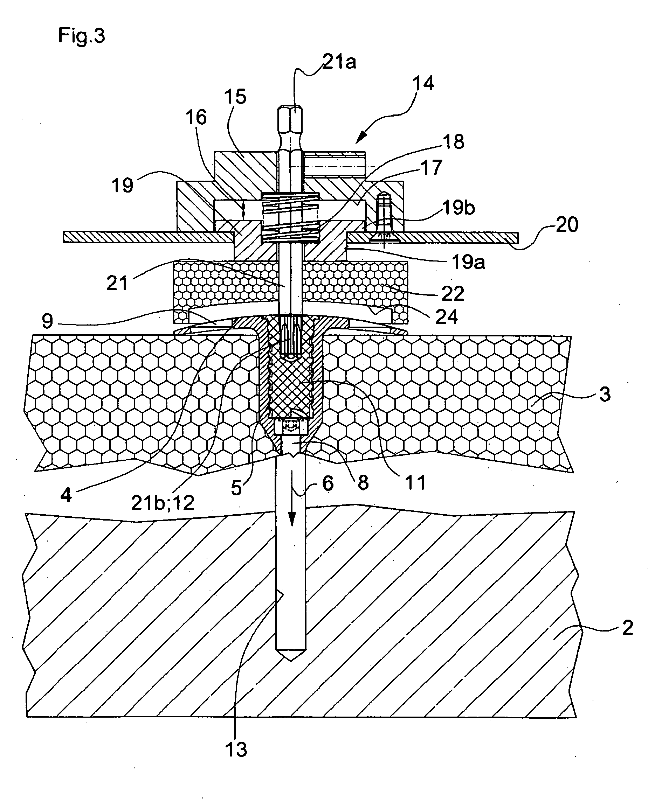

Ein in den Fig. 1a, 1b dargestellter Tellerdübel 1 als Befestigungselement für eine an einer Unterkonstruktion 2 (Mauerwerk, Holzlatten oder dergleichen) zu montierende Dämmstoffplatte 3 (vgl. Fig. 3) besteht aus einem Halteteller 4 und einer sich diesem anschließenden Dübelhülse 5, die in Montagerichtung 6 (vgl. den Pfeil) vorne eine Spreizzone 7 aufweist. Diese wird zur Verankerung in der Unterkonstruktion von einem stiftartigen Spreizelement 8, z.B. ein Nagel, insbesondere eine Nagelschraube, aufgeweitet, wie in Fig. 1a gezeigt.

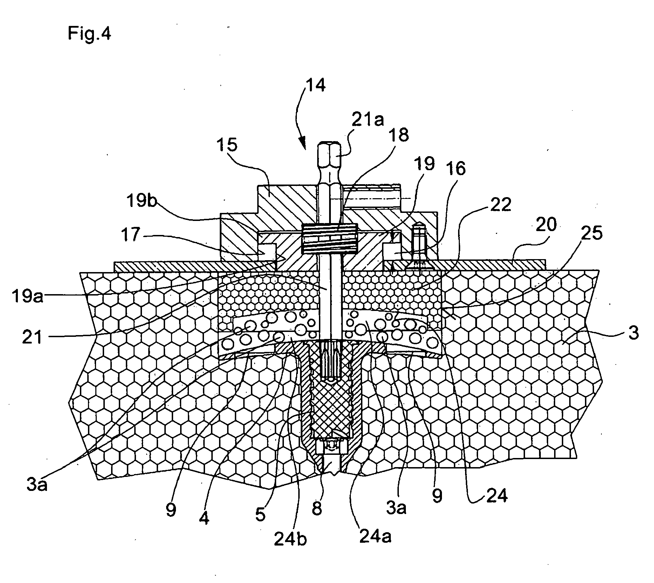

Der nach dem Ausführungsbeispiel etwas nach unten gewölbte Halteteller 4 des Tellerdübels 1 ist mit Durchgangsöffnungen 9 versehen, durch die hindurch sich beim Eintreiben des Tellerdübels 1 in die Dämmstoffplatte 3 aus dieser als Krümel bzw. Körner lösende Isoliermaterial 3a, wie in Fig. 4 angedeutet, tritt. Dieses Ablösen des Isoliermaterials 3a wird durch eine von einem Einschraubmittel (Schraubdreher oder dergleichen) dem Tellerdübel 1 auferlegte Rotation um seine Längsachse bewirkt. Bei dem Tellerdübel 1 gemäß Ausführungsbeispiel ist das Einschraubmittel nicht im direkten Eingriff mit dem Spreizelementkopf 10, sondern über einen form- und kraftschlüssig oberhalb des Spreizelementkopfes 10 in der Dübelhülse 5 angeordneten Isolierstopfen 11 mit einer darin ausgebildeten Werkzeugaufnahme 12.

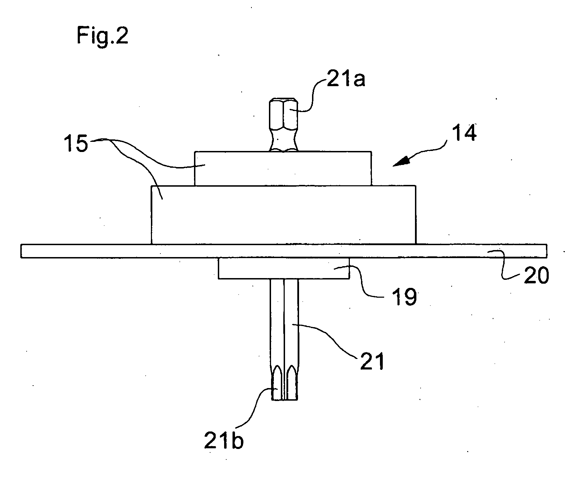

Nach dem Einsetzen des Tellerdübels 1 in ein in der Dämmstoffplatte 3 und der Unterkonstruktion 2 zuvor gebohrtes Bohrloch 13 (vgl. Fig. 3) wird der Tellerdübel 1 mit einem in Fig. 2 dargestellten Werkzeug 14 in die Dämmstoffplatte 3 und die Unterkonstruktion 2 eingetrieben. Es umfasst, wie näher in der Zusammenschau mit den Fig. 3 und 4 zu erkennen, eine in seinem Werkzeuggehäuse 15 mit begrenzt linearem Bewegungsspiel 16 in einer Gehäusekammer 17 angeordnete, von einem Federmittel 18 in Montagerichtung 6 beaufschlagte Druckplatte 19 und einen Tiefenbegrenzungsanschlag 20. Dieser dient gleichzeitig zur Halterung der Druckplatte 19 in der Gehäusekammer 17, wozu die Druckplatte 19 gestuft ausgebildet ist und einen gegenüber dem durch den Tiefenbegrenzungsanschlag 20 hindurchgeführten Plattenkörper 19a im Durchmesser größeren Plattenkragen 19b aufweist. Ein durch fluchtende Durchgangsbohrungen des Werkzeuggehäuses 15 und der Druckplatte 19 einsteckbarer Schraubbit 21 bzw. Schraubdrehereinsatz vervollständigt das Werkzeug 14. Auf die oben aus dem Werkzeuggehäuse 15 frei hervorragende Antriebsseite 21a lässt sich ein nicht dargestelltes Einschraubmittel ankoppeln bzw. aufsetzen, während das andere, vordere Ende des Schraubbits 21 als Formschlusskopf 21 b ausgebildet ist, der in die Werkzeugaufnahme 12 im Isolierstopfen 11 des Tellerdübels 1 eingerastet werden kann, so dass darüber der Antrieb zur Rotation des Tellerdübels 1 bei der Montage erfolgt.

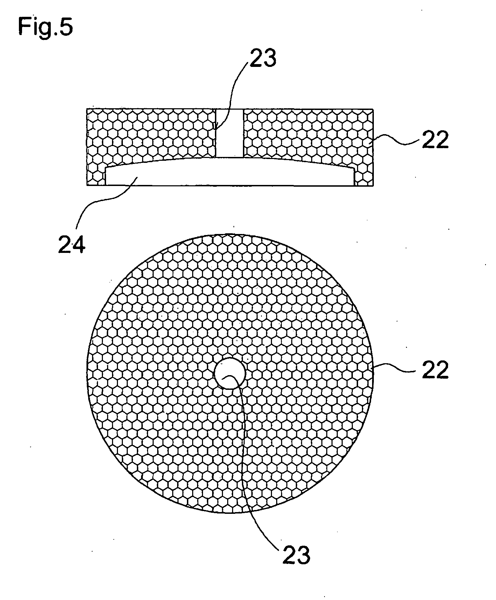

Die Fig. 3 zeigt ein zur Montage vorbereitetes Befestigungssystem, das neben dem vorbeschriebenen Werkzeug 14 und dem Tellerdübel 1 auch eine Abdeckscheibe 22 umfaßt. Diese weist eine zentrische Schraubbit-Durchführungsöffnung 23 auf und ist an ihrer in Montagerichtung 6 vorderen Ringflächenseite mit einer Hohlkammer 24 ausgebildet (vgl. Fig. 5). Wie die Montagevorbereitungsposition nach Fig. 3 zu erkennen gibt, wird die Abdeckscheibe 22 ebenfalls auf den Schraubbit 21 aufgefädelt und nach dem Aufsetzen des Werkzeugs 14 in den in das vorgefertigte Bohrloch 13 bereits eingesetzten Tellerdübel 1 unter Zwischenschaltung der Druckplatte 19 von dem Federmittel 18 beaufschlagt auf Spannung zum Halteteller 4 des Tellerdübels 1 gehalten. Wenn dann über den Schraubbit 21 von dem an die Antriebsseite 21 angeschlossenen Einschraubmittel der Antrieb zum Vortrieb des Tellerdübels 1 in Montagerichtung 6 eingeleitet wird, überträgt sich die Rotationsbewegung über den in die Werkzeugaufnahme 12 Isolierstopfens 11 eingreifenden Formschlusskopf 21 b des Schraubbits 21 auf den Tellerdübel 1 und dessen Halteteller 4.

Mit zunehmendem An- bzw. Eintrieb arbeitet sich der Tellerdübel 1 unter Bildung eines Senkloches 25 (vgl. Fig. 4) gewünscht tief in die Dämmstoffplatte 3 ein, wobei sich der Plattenkragen 19b der Druckplatte 19 im Rahmen des Bewegungsspiels 16 in der Gehäusekammer 17 von dem Tiefenbegrenzungsanschlag 20 entfernt bzw. abhebt. Es lässt sich damit in einem Arbeitsgang einhergehend mit dem Einbringen des Tellerdübels 1 dessen Halteteller 4 staubfrei versenken und gleichzeitig die Abdeckscheibe 22 zum oberflächenbündigen Verschließen des Senkloches 25 einsetzen. Denn während des Vortriebs hält die Druckplatte 19 unter der Kraft des Federelementes 18 die Abdeckscheibe 22 permanent auf Spannung zu dem Halteteller 4, wobei der Halteteller 4 bzw. das Senkloch 25 von Beginn an durch die Abdeckscheibe 2 stets voll umfänglich nach außen abgedichtet wird. Das aus dem Senkloch 25 der Dämmstoffplatte 3 durch die Rotation des Haltetellers 4 abgelöste Isoliermaterial 3a tritt nämlich durch die Durchgangsöffnungen 9 des Haltetellers 4 und wird in der Hohlkammer 24 der Abdeckscheibe 22 gesammelt.

Das Montageende ist in Fig. 4 dargestellt, der sich weiterhin aber auch entnehmen lässt, dass die Dicke der Abdeckscheibe 22 kleiner als die Tiefe des Senklochs 25 sein kann, indem nämlich durch Verwendung eines längeren Schraubbits der Tellerdübel 1 tiefer in die Dämmstoffplatte 3 versenkt wird. Es entsteht damit unterhalb der Abdeckscheibe ein Luftraum 24 b, und bei Verwendung einer Abdeckscheibe 22 mit Hohlkammer 24 ein zu deren Luftraum 24 a zusätzlich isolierender Freiraum, wodurch der Wärmedurchgangskoeffizient dort, wo die Dämmstoffplattenbefestigungen angebracht sind, weiter verbessert werden kann. Dies entweder zur Ansammlung von sich ablösendem, durch die Durchgangsöffnungen 9 des Haltetellers 4 entweichendem Isoliermaterial oder als Luftraum beim Einsatz eines Tellerdübels mit geschlossenem, keine Durchgangsöffnungen aufweisenden Halteteller, wobei dann der Luftraum 24 a der Hohlkammer 24 und der darunter im Senkloch 25 erzeugte Luftraum 24 b von Isoliermaterial völlig frei bleiben. Das ist mit Bezug auf Fig. 4 einfach nachzuvollziehen, indem das dort körnig bzw. krümelig angedeutete Isoliermaterial 3 a bei dieser durch den Luftraum 24 b im Senkloch 25 der Dämmstoffplatte 3 unterhalb der Abdeckscheibe und / oder der Hohlkammer 24 mit ihrem Luftraum 24 a in der Abdeckscheibe 22 eine reine Luftpolsterausbildung gleich kommenden Variante nicht vorhanden ist bzw. nur weggedacht zu werden braucht.

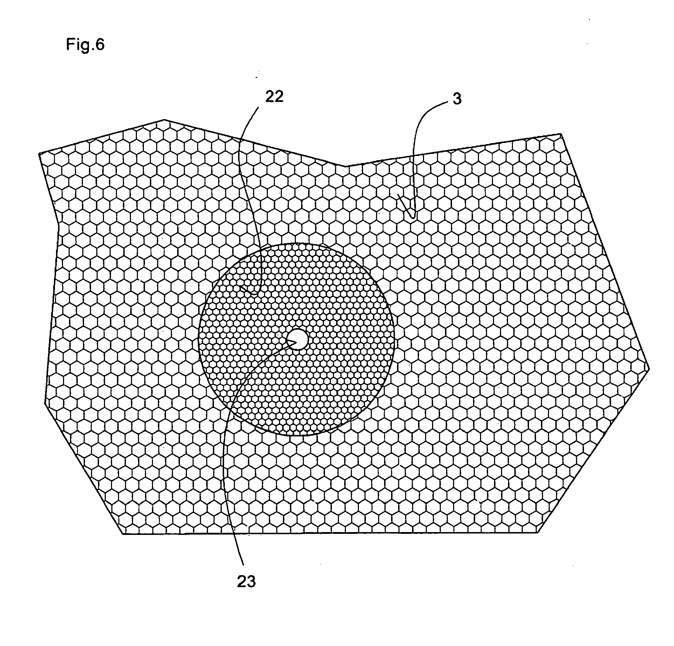

Die nach der Montage und dem Entfernen bzw. Abziehen des Werkzeugs 14 oberflächenbündig versenkte, in der Dämmstoffplatte 3 verbleibende Abdeckscheibe 22 ist in Fig. 6 dargestellt. Die Schraubbit-Durchführungsöffnung 23 braucht hierbei nicht nachträglich abgedichtet zu werden, da der Drehantrieb nicht direkt in das stiftartige Spreizelement 8, sondern indirekt über den Isolierstopfen 11 des Tellerdübels 1 eingeleitet wird, so dass der Isolierstopfen 11 die Schraubbit-Durchführungsöffnung 23 hinlänglich zu dem stiftartigen Spreizelement 8 abdichtet.

### Bezugszeichenliste:

- 1: Tellerdübel (Befestigungselement)
- 2: Unterkonstruktion
- 3: Dämmstoffplatte
- 3a: Isoliermaterial
- 4: Halteteller
- 5: Dübelhülse
- 6: Montagerichtung (Pfeil)
- 7: Spreizzone
- 8: stiftartiges Spreizelement
- 9: Durchgangsöffnung
- 10: Spreizelementkopf
- 11: Isolierstopfen
- 12: Werkzeugaufnahme
- 13: Bohrloch
- 14: Werkzeug
- 15: Werkzeuggehäuse
- 16: Bewegungsspiel
- 17: Gehäusekammer
- 18: Federelement/-mittel
- 19: Druckplatte
- 19a: Plattenkörper
- 19b: Plattenkragen
- 20: Tiefenbegrenzungsanschlag
- 21: Schraubbit (Schraubdrehereinsatz)
- 21a: Antriebsseite
- 21b: Formschlusskopf
- 22: Abdeckscheibe
- 23: Schraubbit-Durchführungsöffnung
- 24: Hohlkammer
- 24 a: Luftraum
- 24 b: Luftraum
- 25: Senkloch

## Patentansprüche

1. Verfahren zur Montage einer Dämmstoffplatte (3) an einer Unterkonstruktion (2), bei dem ein aus einem Halteteller (4) und sich daran anschließend einer in eine Spreizzone (7) übergehenden Dübelhülse (5) bestehender, ein stiftartiges Spreizelement (8) aufnehmender, in ein in der Dämmstoffplatte und der Unterkonstruktion zuvor gebohrtes Bohrloch (13) eingesetzter Tellerdübel (1) als Befestigungselement mit einem Einschraubmittel rotierend in das Isoliermaterial der Dämmstoffplatte (3) eingetrieben wird, wobei in Eintriebrichtung vor dem Halteteller (4) ein Senkloch (25) entsteht, das nach außen abgedeckt wird und dessen aus der Dämmstoffplatte (3) verdrängtes Isoliermaterial in der Dämmstoffplatte (3) verbleibt,
**dadurch gekennzeichnet,**
**dass** eine der Dämmstoffplatte (3) zugewandte Abdeckscheibe (22) beim Vortrieb des Tellerdübels (1) in das Isoliermaterial zumindest bis zum Erreichen der der Dicke der Abdeckscheibe (22) entsprechenden Eindringtiefe von einem Federmittel (18) beaufschlagt permanent auf Spannung zu dem Halteteller (4) des Tellerdübels (1) gehalten wird, wobei das entstehende Senkloch (25) von der konzentrisch dazu an den äußeren Randbereich des Haltetellers (4) angedrückten Abdeckscheibe (22) voll umfänglich nach außen abgedichtet wird und wobei zwischen dem Halteteller (4) und der nach dem Vortriebsende in dem Senkloch (25) der Dämmstoffplatte (3) verbleibenden, dieses flächenbündig abschließenden Abdeckscheibe (22) ein isolierender Luftraum (24; 24 a, 24 b) ausgebildet wird.

2. Verfahren nach Anspruch 1,
**dadurch gekennzeichnet,**
**dass** der Luftraum (24 a) durch eine in der der Dämmstoffplatte (3) zugewandten Stirnseite der Abdeckseite (22) ausgebildete Hohlkammer (24) erzeugt wird.

3. Verfahren nach Anspruch 1 oder 2,
**dadurch gekennzeichnet,**
**dass** der Tellerdübel (1) tiefer in die Dämmstoffplatte (3) versenkt wird als die Abdeckscheibe (22), wodurch unterhalb der Abdeckscheibe (22) bis zu dem Halteteller (4) ein zu der Hohlkammer (24) zusätzlicher Luftraum (24 b) erzeugt wird.

4. Verfahren nach einem der Ansprüche 1 bis 3,
**dadurch gekennzeichnet,**
**dass** bei der Montage unter Verwendung eines in seinem Halteteller (4) mit Durchgangsöffnungen (9) versehenen Tellerdübels (1) in krümeliger oder körniger Form verdrängtes Isoliermaterial (3 a) über die Durchgangsöffnungen (9) entweichen kann und in der Hohlkammer (24) und / oder dem zusätzlichen Luftraum unterhalb der Abdeckscheibe (22) gesammelt wird.

5. Verfahren nach Anspruch 1,
**dadurch gekennzeichnet,**
**dass** die Abdeckscheibe (22) mittelbar, unter Zwischenschaltung einer Druckplatte (19), von dem Federmittel (18) beaufschlagt wird.

6. Verfahren nach einem der Ansprüche 1 bis 5,
**dadurch gekennzeichnet,**
**dass** aus dem gleichen Isoliermaterial wie die Dämmstoffplatte (3) bestehende Abdeckscheiben (22) verwendet werden.

7. Werkzeug, das beim Einsatz einen von einem Einschraubmittel antreibbaren Schraubbit aufweist und geeignet ist zur Montage einer Dämmstoffplatte (3) an einer Unterkonstruktion (2), das einen aus einem Halteteller (4), der vorzugsweise mit Durchgangsöffnungen (9) versehen ist, und sich daran anschließend einer in eine Spreizzone (7) übergehenden Dübelhülse (5) bestehenden, ein stiftartiges Spreizelement (8) aufnehmenden, in ein in der Dämmstoffplatte und der Unterkonstruktion zuvor gebohrtes Bohrloch (13) eingesetzten Tellerdübel (1) als Befestigungselement mit einem Einschraubmittel rotierend in das Isoliermaterial der Dämmstoffplatte (3) eintreibt, wobei in Eintriebrichtung vor dem Halteteller (4) ein Senkloch (25) entsteht, das nach außen hin abgedeckt wird und dessen aus der Dämmstoffplatte (3) verdrängtes Isoliermaterial (3a) in der Dämmstoffplatte (3) verbleibt, insbesondere zum Durchführen des Verfahrens nach einem der Ansprüche 1 bis 6,
**dadurch gekennzeichnet,**
**dass** in einer Gehäusekammer (17) eines Werkzeuggehäuses (15) mit begrenzt linearem Bewegungsspiel (16) eine von einem Federmittel (18) in Montagerichtung (6) beaufschlagte Druckplatte (19) angeordnet ist, wobei das Werkzeuggehäuse (15) und die Druckplatte (19) mit fluchtenden Durchgangsöffnungen für einen hindurchsteckbaren Schraubbit (21) ausgebildet sind.

8. Werkzeug nach Anspruch 7,
**dadurch gekennzeichnet,**
**dass** der Gehäusekammer (17) in Montagerichtung (6) ein am Werkzeuggehäuse (15) befestigter, die Druckplatte (19) in der Gehäusekammer (17) haltender Tiefenbegrenzungsanschlag (20) vorgeschaltet ist, wobei die Druckplatte (19) gestuft ausgebildet ist und sich mit einem gegenüber dem durch den Tiefenbegrenzungsanschlag (20) hindurchgeführten Plattenkörper (19a) im Durchmesser größeren Plattenkragen (19b) auf den Tiefenbegrenzungsanschlag (20) legt.

9. Werkzeug nach Anspruch 7 oder 8,
**dadurch gekennzeichnet,**
**dass** das Federmittel (28) eine Druckfeder ist, die sich an der Druckplatte (19) und gegenüberliegend an der Endwand der Gehäusekammer (17) abstützt.

## Claims

1. A method for mounting an insulating board (3) on a substructure (2), in which a fastening element in the form of a plate anchor (1), which consists of a retaining plate (4) and an adjacent anchor sleeve (5) that transforms into an expansion zone (7) and receives a pin-like expansion element (8), is inserted into a bore hole (13) pre-drilled into the insulating board and the substructure and rotatively driven into the insulating material of the insulating board (3) with a screw-driving means, wherein a sinkhole (25), which is covered toward the outside, is formed in front of the retaining plate (4) referred to the driving direction, and wherein the insulating material of said sinkhole, which was displaced from the insulating board (3), remains in the insulating board (3),
**characterized in**
**that** a cover disc (22), which faces the insulating board (3), is acted upon by a spring element (18) and thereby permanently tensioned relative to the retaining plate (4) of the plate anchor (1) while the plate anchor (1) is driven into the insulating material, namely at least until a penetration depth corresponding to the thickness of the cover disc (22) is reached, wherein the sinkhole (25) being formed is completely sealed toward the outside by the cover disc (22) that is pressed against the outer edge region of the retaining plate (4) concentric to the sinkhole, and wherein an insulating air space (24; 24 a, 24 b) is formed between the retaining plate (4) and the cover disc (22) that remains in the sinkhole (25) of the insulating board (3) after the completion of the driving process and closes said sinkhole flush with the adjacent areas.

2. The method according to claim 1,
**characterized in**
**that** the air space (24 a) is formed by a hollow chamber (24) produced in the face side of the cover disc (22) facing the insulating board (3).

3. The method according to claim 1 or 2,
**characterized in**
**that** the plate anchor (1) is sunk deeper into the insulating board (3) than the cover disc (22) such that another air space (24 b) is formed in addition to the hollow chamber (24) underneath the cover disc (22) up to the retaining plate (4).

4. The method according to one of claims 1-3,
**characterized in**
**that** insulating material (3 a), which is displaced in crumbly or grainy form during the installation by means of a plate anchor (1) provided with through-openings (9) in its retaining plate (4), can escape via the through-openings (9) and be collected in the hollow chamber (24) and/or the additional air space underneath the cover disc (22).

5. The method according to claim 1,
**characterized in**
**that** the cover disc (22) is indirectly acted upon by the spring element (18) via an intermediately arranged pressure plate (19).

6. The method according to one of claims 1-5,
**characterized in**
**that** the cover discs (22) used consists of the same insulating material as the insulating board (3).

7. A tool, which during its use features a screw bit that can be driven by a screw-driving means and is suitable for installing an insulating board (3) on a substructure (2) by inserting a fastening element in the form of a plate anchor (1), which consists of a retaining plate (4) that is preferably provided with through-openings (9) and an adjacent anchor sleeve (5) that transforms into an expansion zone (7) and receives a pin-like expansion element (8), into a bore hole (13) pre-drilled into the insulating board and the substructure and rotatively driving said plate anchor into the insulating material of the insulating board (3) with the screw-driving means, wherein a sinkhole (25), which is covered toward the outside, is formed in front of the retaining plate (4) referred to the driving direction, and wherein the insulating material (3a) of said sinkhole, which was displaced from the insulating board (3), remains in the insulating board (3), particularly for carrying out the method according to one of claims 1-6,
**characterized in**
**that** a pressure plate (19), which is acted upon in the installation direction (6) by a spring element (18), is arranged in a housing chamber (17) of a tool housing (15) with limited linear motion clearance (16), wherein the tool housing (15) and the pressure plate (19) are realized with aligned through-openings for an insertable screw bit (21).

8. The tool according to claim 7,
**characterized in**
**that** a depth limit stop (20), which is fastened on the tool housing (15) and holds the pressure plate (19) in the housing chamber (17), is arranged in front of the housing chamber (17) referred to the installation direction (6), wherein the pressure plate (19) is realized in a stepped fashion and places itself against the depth limit stop (20) with a plate collar (19b) that has a larger diameter than the plate body (19a) extending through the depth limit stop (20).

9. The tool according to claim 7 or 8,
**characterized in**
**that** the spring element (28) consists of a pressure spring that is braced against the pressure plate (19) and on the opposite side against the end wall of the housing chamber (17).

## Revendications

1. Procédé pour le montage d'un panneau isolant (3) sur une sous-structure (2), dans lequel une cheville à rosace (1) constituée d'une rosace d'arrêt (4) et d'une douille de cheville (5) consécutive à celle-ci et suivie d'une zone d'écartement (7), recevant un élément d'écartement du genre tige (8) et insérée dans un trou percé (13) préalablement foré dans la sous-structure, est enfoncée de façon rotative en tant qu'élément de fixation dans le matériau isolant du panneau isolant (3) à l'aide d'un moyen fileté, dans lequel un trou fraisé (25) recouvert vers l'extérieur, et dont le matériau isolant expulsé du panneau isolant (3) demeure dans le panneau isolant (3), apparaît devant la rosace d'arrêt (4) dans la direction d'enfoncement,
**caractérisé en ce que**
un disque de recouvrement (22) tourné vers le panneau isolant (3) est en permanence maintenu sous tension par rapport à la rosace d'arrêt (4) de la cheville à rosace (1), tout en étant précontraint par un moyen à ressort (18), lors de l'entrée de la cheville à rosace (1) dans le matériau isolant, jusqu'à atteindre la profondeur d'insertion correspondant à l'épaisseur du disque de recouvrement (22), le trou fraisé (25) ainsi créé étant étanchéifié vers l'extérieur sur l'ensemble de son pourtour par le disque de recouvrement (22) appuyé de façon concentrique par rapport à celui-ci sur la région de bord extérieure de la rosace d'arrêt (4), et dans lequel un espace d'air isolant (24 ; 24a ; 24b) est formé entre la rosace d'arrêt (4) et le disque de recouvrement (22) demeurant dans le trou fraisé (25) du panneau isolant (3) à la fin de l'insertion et fermant celui-ci en affleurement.

2. Procédé selon la revendication 1,
**caractérisé en ce que**
l'espace d'air (24a) est produit par une chambre creuse (24) formée dans le côté frontal du disque de recouvrement (22) qui est tourné vers le panneau isolant (3).

3. Procédé selon la revendication 1 ou 2,
**caractérisé en ce que**
la cheville à rosace (1) est enfoncée plus profondément dans le panneau isolant (3) que le disque de recouvrement (22), produisant ainsi un espace d'air supplémentaire (24b) en plus de la chambre creuse (24) sous le disque de recouvrement (22), jusqu'à la rosace d'arrêt (4).

4. Procédé selon l'une des revendications 1 à 3,
**caractérisé en ce que**
lors du montage à l'aide d'une cheville à rosace (1) pourvue d'ouvertures de passage (9) dans sa rosace d'arrêt (4), du matériau isolant (3a) expulsé sous forme de grumeaux ou de grains peut s'échapper par les ouvertures de passage (9) et est collecté dans la chambre creuse (24) et/ou dans l'espace d'air supplémentaire sous le disque de recouvrement (22).

5. Procédé selon la revendication 1,
**caractérisé en ce que**
le disque de recouvrement (22) est indirectement précontraint par le moyen à ressort (18), par l'intermédiaire d'une plaque de pression (19).

6. Procédé selon l'une des revendications 1 à 5,
**caractérisé en ce que**
des disques de recouvrement (22) constitués du même matériau isolant que le panneau isolant (3) existant sont utilisés.

7. Outil présentant un embout de vissage apte à être entraîné par un moyen fileté lors de l'utilisation, et adapté pour le montage d'un panneau isolant (3) sur une sous-structure (2), lequel enfonce une cheville à rosace (1) constituée d'une rosace d'arrêt (4), de préférence pourvue d'ouvertures de passage (9), et d'une douille de cheville (5) consécutive à celle-ci et suivie d'une zone d'écartement (7), recevant un élément d'écartement du genre tige (8) et insérée dans un trou percé (13) foré préalablement dans la sous-structure, en tant qu'élément de fixation de façon rotative dans le matériau isolant du panneau isolant (3) à l'aide d'un moyen à ressort, dans lequel un trou fraisé (25) recouvert vers l'extérieur, dont le matériau isolant (3a) expulsé du panneau isolant (3) demeure dans le panneau isolant (3), apparaît devant la rosace d'arrêt (4) dans la direction d'enfoncement, en particulier pour l'exécution du procédé selon l'une des revendications 1 à 6,
**caractérisé en ce que**
une plaque de pression (19) précontrainte par un moyen à ressort (18) dans la direction de montage (6) est disposée dans la chambre de boîtier (17) d'un boîtier d'outil (15) avec un jeu linéaire limité (16), le boîtier d'outil (15) et la plaque de pression (19) étant conçus avec des ouvertures de passage alignées pour un embout de vissage (21) apte à traverser celles-ci.

8. Outil selon la revendication 7,
**caractérisé en ce que**
une butée de limitation de profondeur (20) fixée sur le boîtier d'outil (15) et maintenant la plaque de pression (19) dans la chambre de boîtier (17) est formée en amont de la chambre de boîtier (17) dans la direction de montage (6), la plaque de pression (19) étant étagée et s'appliquant sur la butée de limitation de profondeur (20) avec un collet de plaque (19b) présentant un diamètre plus grand que celui du corps de plaque (19a) traversant la butée de limitation de profondeur (20).

9. Outil selon la revendication 7 ou 8,
**caractérisé en ce que**
le moyen à ressort (28) est un ressort de pression s'appuyant sur la plaque de pression (19) et en face sur la paroi terminale de la chambre de boîtier (17).
